Europäisches Patentamt

European Patent Office

Office européen des brevets

(11) Publication number: **0 219 238**
**B1**

# (12) EUROPEAN PATENT SPECIFICATION

(45) Date of publication of the patent specification:
**31.05.89**

(51) Int. Cl.⁴: **B60T 8/32**

(21) Application number: **86307254.2**

(22) Date of filing: **22.09.86**

(54) Anti-lock brake control apparatusand method.

(30) Priority: **15.10.85 US 787440**

(43) Date of publication of application:
**22.04.87 Bulletin 87/17**

(45) Publication of the grant of the patent:
**31.05.89 Bulletin 89/22**

(84) Designated Contracting States:
**DE GB**

(56) References cited:
**DE-A- 3 226 074**
**US-A- 3 586 387**
**US-A- 3 701 568**
**US-A- 4 576 417**

**PATENT ABSTRACTS OF JAPAN, vol. 6,**
**no. 153 (M-149)[1031], 13th August 1982; &**
**JP-A-57 70 758 (HITACHI SEISAKUSHO K.K.) 01-05-1982**

(73) Proprietor: **GENERAL MOTORS CORPORATION,**
**General Motors Building 3044 West Grand Boulevard,**
**Detroit Michigan 48202(US)**

(72) Inventor: **Lin, William Chin-Woei, 4985 Butler, Troy**
**Michigan 48098(US)**

(74) Representative: **Denton, Michael John et al, Patent**
**Section - Luton Office (F6) Vauxhall Motors Limited P.O.**
**Box 3 Kimpton Road, Luton Bedfordshire LU2 0SY(GB)**

ACTORUM AG

## Description

This invention relates to an anti-lock control apparatus for vehicle brakes.

When the brakes of a vehicle are applied, a braking force between the tyre and the road surface is generated that is dependent upon various parameters including the road surface condition and the amount of slip between the tyre and the road surface. For a given road surface, the brake force between the tyre and the road surface increases with increasing wheel slip values to a peak force occurring at a critical wheel slip value. As the value of wheel slip increases beyond the critical wheel slip value, the braking force between the tyre and the road surface decreases. Stable braking results when the wheel slip value is equal to or less than the critical wheel slip value. However, when the wheel slip value becomes greater than the critical wheel slip value, braking becomes unstable resulting in sudden wheel lockup thereby reducing vehicle stopping distance and a deterioration in the lateral stability of the vehicle.

Numerous anti-lock control apparatus have been proposed to prevent the wheels from locking during a braking manoeuvre. Typically, these apparatus control the brake pressure applied to the wheels to prevent locking by releasing the applied brake pressure when an incipient lockup condition is sensed (which may be represented by the wheel deceleration exceeding a critical value) and reapplying the brake pressure when the wheel has recovered from the incipient wheel lock condition (which may be represented by the wheel acceleration during wheel speed recovery while the brake pressure is released decreasing to a value representing the wheel approaching a hypothetical zero-slip wheel speed. This type of apparatus results in rapid cycling of the brake pressure and the wheel slip value around the critical wheel slip value to maintain a stable braking operation. Such an arrangement is disclosed in US Patent No. 3,701,568.

As opposed to the foregoing apparatus for preventing wheel lockup, the subject invention is directed toward an anti-lock control apparatus wherein the critical wheel slip value producing the maximum braking force between the road surface and the tyre is identified and the brake pressure is modulated continuously when an incipient wheel lock condition is sensed so as to maintain the actual wheel slip value at the identified critical wheel slip value thereby preventing wheel lockup and providing substantially the maximum possible braking effort between the tyre and the road surface.

To this end, an anti-lock control apparatus for vehicle brakes in accordance with the present invention is characterised by the features specified in Claims I and 4 respectively.

In general, the subject anti-lock control apparatus continuously monitors vehicle deceleration which is utilized during braking to determine the vehicle velocity in the form of the speed of a hypothetical free-spinning wheel having zero slip. The slip of the wheel during braking is determined by comparing the actual wheel speed to the speed of the hypothetical free-spinning wheel. The wheel slip value determined is compared with a critical wheel slip value that results in the maximum braking force between the wheel and the road surface. The difference between the actual wheel slip value and the critical wheel slip value is utilized to continuously modulate the brake pressure to maintain the wheel slip value at the critical wheel slip value producing the maximum wheel-road surface braking force.

In accordance with this invention, the value of the critical wheel slip value is determined during each brake application by continuously monitoring both the vehicle deceleration and the actual wheel slip value. The critical wheel slip value is determined to be the slip value that exists at the maximum sensed value of vehicle deceleration. When the brakes are applied, the wheel slip increases and the vehicle begins to decelerate. As the magnitude of the deceleration increases, the measured wheel slip value corresponding thereto is stored. The maximum vehicle deceleration will occur when the wheel slip value becomes equal to the critical wheel slip value corresponding to the peak brake force between the wheel and the road surface. Therefore, the wheel slip value stored at that vehicle deceleration becomes the reference for controlling vehicle slip. The brake pressure is continuously modulated to limit the wheel slip value to the stored critical wheel slip value to achieve optimum braking conditions.

The invention is now described, by way of example, with reference to the following description of a preferred embodiment and the accompanying drawings, in which:

Figure I is a diagram illustrating the brake friction coefficient between a tyre and a road surface as a function of the percentage slip between the tyre and the road surface for two road surface conditions;

Figure 2 is a general diagram of the anti-lock control apparatus for controlling the vehicle brakes in accordance with the principles of this invention;

Figure 3 is a diagram of the electronic controller of figure 2;

Figures 4 and 5 are diagrams illustrating the operation of the electronic controller of Figure 3 in controlling the wheel brake pressure; and

Figure 6 is a diagram illustrating the function for anticipating an impending wheel lock condition.

A wheel under the influence of braking has two major torques acting on it: brake torque and tyre torque. The brake torque arises from the application of brake pressure through the brake mechanism and the tyre torque is generated by the friction of the tyre-road interface as wheel slip occurs. The tyre torque is a non-linear function of the magnitude of slip between the wheel and the road surface during braking and is dependent upon the road surface condition.

Figure I illustrates the brake friction coefficient between a tyre and road surface as a function of the percentage wheel slip for two road surface conditions. For a given road surface, it can be seen that as wheel slip is increased in response to increased brake torque, the brake friction coefficient and therefore the tyre torque increases until a critical or optimum slip value at which the brake friction coefficient and the tyre torque is a maximum. A further increase in wheel slip results in a decrease in the brake friction coefficient and the tyre torque.

The maximum tyre torque resulting in a maximum braking effort for a given road surface is achieved when the brake torque produces the critical wheel slip value at the peak value of the brake friction coefficient. When the braking effort results in wheel slip exceeding the critical slip value, the braking operation becomes unstable and may result in a sudden wheel lockup. Since the magnitude of vehicle deceleration is directly proportional to the magnitude of the brake friction coefficient, maximum vehicle deceleration will occur when the wheel slip is at the critical value at which the brake friction coefficient is a maximum. Therefore, maximum braking effort is achieved producing peak vehicle deceleration when the slip value is at the critical slip value.

In general, the anti-lock control apparatus incorporating the principles of this invention stores the wheel slip value existing at the time the maximum vehicle deceleration is sensed. When the actual slip value exceeds this stored value, the brake pressure is modulated to limit the wheel slip value to the stored value to prevent wheel lockup and to produce the maximum possible braking effort.

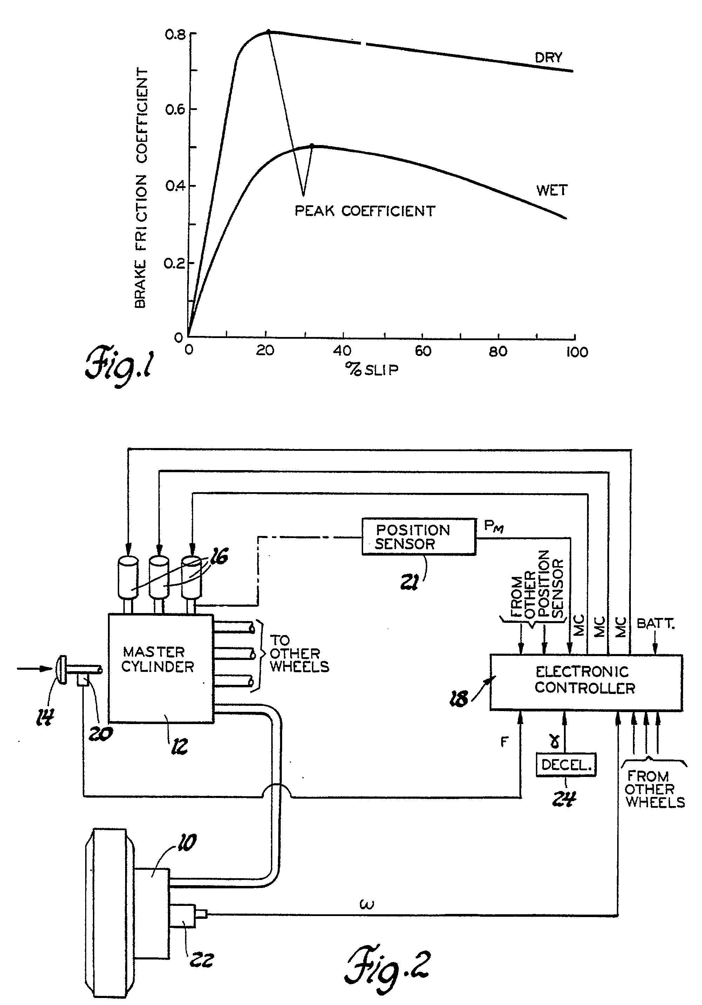

A general overview of the anti-lock control apparatus of this invention is illustrated in Figure 2. Standard brakes I0 (one of four shown) are actuated by controlled hydraulic pressure from a master cylinder I2. The hydraulic pressure output of the master cylinder I2 to the four wheels of the vehicle is controlled directly by a brake pedal I4 and by electric motors I6. An electronic controller I8 provides a respective motor control signal MC to the electric motors I6 in response to the force output signal F of a brake pedal force sensor 20 and a position feedback signal $P_M$ from position sensors 2I monitoring the rotational angle of the output shafts of the electric motors I6 to provide power assisted braking. The position sensors 2I may each take the form of a potentiometer providing a voltage indicating output shaft position. The electronic controller I8 also responds to a wheel speed sensor 22 from each wheel providing a wheel speed signal $\omega$ and a chassis decelerometer 24 providing a vehicle deceleration signal $\alpha$ to determine wheel slip for each wheel. The chassis decelerometer 24 defines sensing means for sensing the deceleration of the vehicle. When excessive slip of one of the wheels is detected, the rotational output of the corresponding electric motor I6 is continuously controlled to limit the slip of the wheel to the critical point where the adhesion between the tyre and road surface is a maximum.

The master cylinder I2 may take the form of the master cylinder described in our US Patent No. 4,576,4I7. In general, the master cylinder I2 provides a modulated pressure to each of the wheels in response to the combined inputs from the brake pedal I4 and the electric motors I6.

In the present embodiment, the brakes I0 of the rear wheels are controlled by a common electric motor I6 and the brakes I0 of the front wheels are independently controlled by individual electric motors I6. The electronic controller I8 responds to the various inputs to provide individual motor control signals MC to each of the electric motors I6 for providing the respective controlled hydraulic pressure outputs of the master cylinder I2. The control of a single front brake I0 will be described to illustrate the present invention, it being understood that similar controls to the remaining brakes are provided in order to achieve the principles of the present invention. In the case of the rear wheels, the electronic controller I8 may select the lowest speed of the two rear wheels for controlling slip.

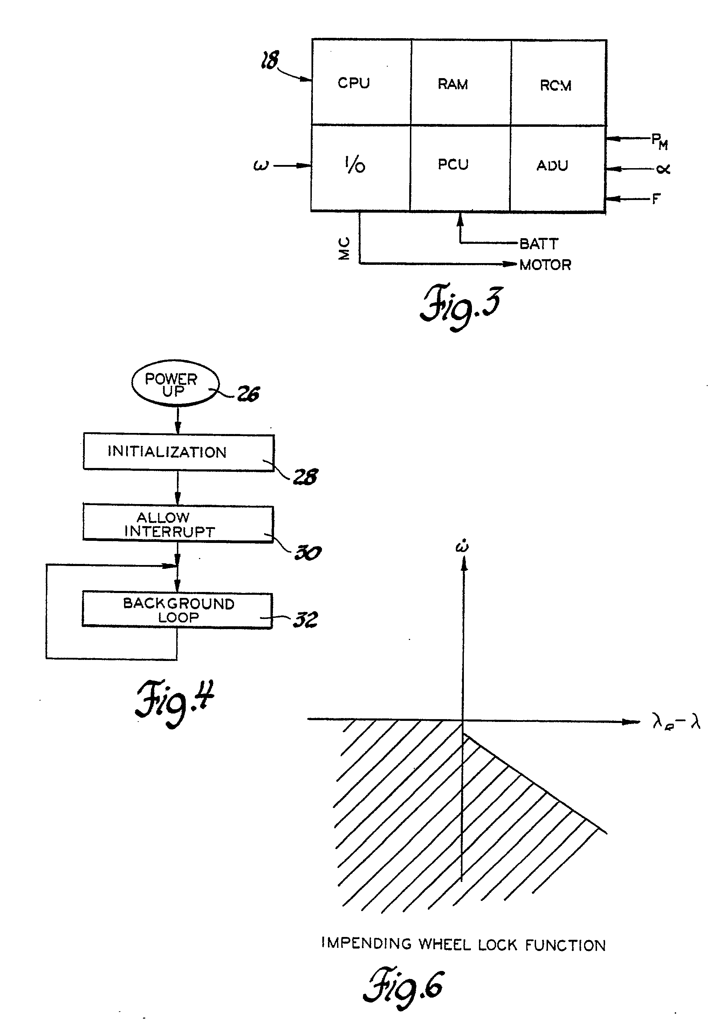

As illustrated in Figure 3, the electronic controller I8 takes the form of a digital computer. The digital computer is standard in form and includes a central processing unit (CPU) which executes an operating program permanently stored in a read-only memory (ROM) which also stores tables and constants utilized in controlling the hydraulic pressure input to the brake I0. Contained within the CPU are conventional counters, registers, accumulators, flag flip flops, etc. along with a clock which provides a high frequency clock signal. The electronic controller I8 also includes a random access memory (RAM) into which data may be temporarily stored and from which data may be read at various address locations determined in accordance with the program stored in the ROM. A power control unit (PCU) receives battery voltage V+ and provides regulated power to the various operating circuits in the electronic controller I8. The electronic controller I8 also includes an input/output circuit (I/O) that in turn includes an output counter section. The output counter section is controlled by the CPU to provide the motor control signal MC, which is duty cycle modulated, to the electric motor I6 for establishing the hydraulic brake pressure input to the brake I0. It is understood that additional signals are provided to the remaining two electric motors I6 for controlling the hydraulic brake pressure inputs to the remaining brakes I0.

The I/O also includes an input counter section which receives the wheel speed signal $\omega$ from the wheel speed sensor 22 which comprises pulses having a frequency representing wheel speed. Wheel speed is then determined by counting clock pulses between each wheel speed signal $\omega$.

The electronic controller I8 also includes an analogue-to-digital converter (ADU) which provides for the measurement of analogue signals. The analogue signals representing conditions upon which the hydraulic brake pressure to the brake I0 is based are supplied to the ADU. In the present embodiment, these analogue signals include the position feedback signal $P_M$ from the position sensor 2I, the force output signal F of the brake pedal force sensor 20 providing a measure of the force applied to the brake pedal I4 and the vehicle deceleration signal $\alpha$ from the chassis decelerometer 24. The analogue signals are sampled and converted under control of the CPU and stored in ROM designated RAM memory locations.

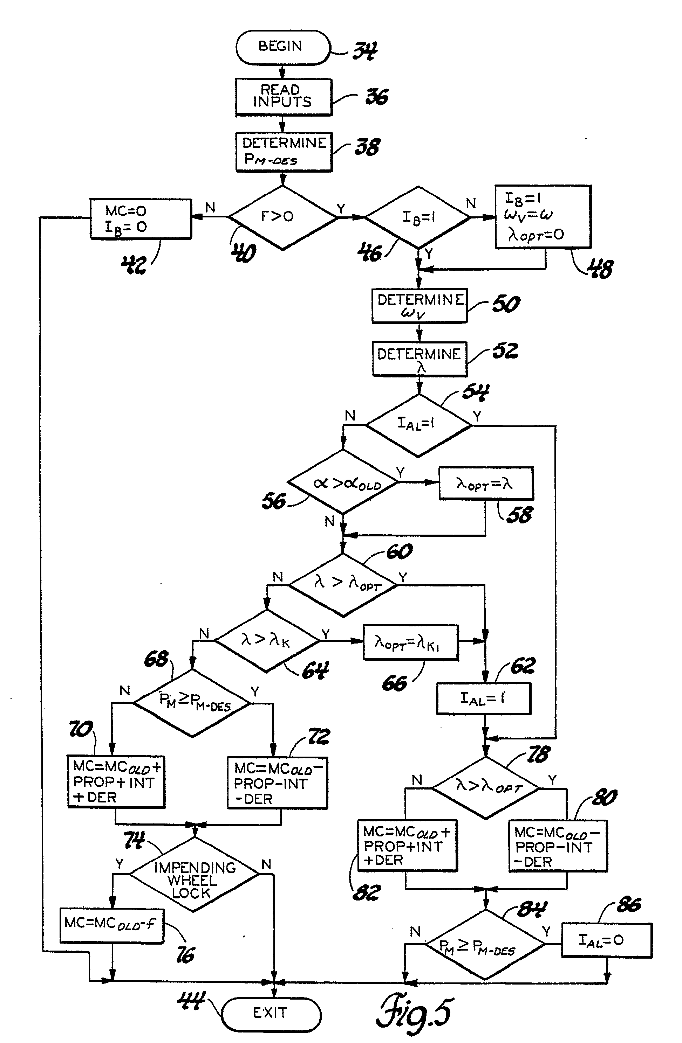

The operation of the electronic controller 18 in controlling the hydraulic brake pressure to the brake 10 in accordance with the principles of this invention is illustrated in Figures 4 and 5. Referring first to Figure 4, when power is first applied to the anti-lock control apparatus such as when the vehicle ignition switch is turned to its "on" position, the computer program is initiated at point 26 and then proceeds to a step 28 where the computer program provides for apparatus initialization. For example, at this step 28 initial values stored in the ROM are entered into ROM designated RAM memory locations and counters, flags and timers are initialized. After the initialization step 28, the computer program proceeds to a step 30 where the computer program allows interrupts to occur such as by resetting the interrupt mask bit in the CPU condition code register. After step 30, the computer program shifts to a background loop 32 which is continuously repeated. This background loop 32 may include, for example, diagnostic routines. An interrupt is provided by the CPU at 5 millisecond intervals during which the routine for establishing the hydraulic brake pressure input to the brake 10 is executed.

Referring to Figure 5, the routine for controlling the hydraulic pressure applied to the brake 10 is begun at step 34 and proceeds to a step 36 where the value of the vehicle deceleration read during the prior execution of step 36 is saved and the new values of the position feedback signal $P_M$, the force output signal F, vehicle deceleration signal $\alpha$ and wheel speed signal $\omega$ are read and stored in RAM memory locations. Next at step 38, a desired motor position $P_{M\text{-}DES}$ is determined as a function of the force indicated by the force output signal F and may be made linearly proportioned thereto.

At decision point 40, the computer program determines whether or not the force indicated by the force output signal F is greater than zero. If the force is zero, i.e., the brake 10 is not activated, the computer program proceeds to a step 42 where the duty cycle of the motor control signal MC is set to zero and a brake flag $I_B$ is reset. The program then exits the routine at point 44.

If the force is greater than zero indicating application of the brakes by the vehicle operator, the program proceeds from decision point 40 to a decision point 46 where the status of the brake flag $I_B$ is checked. If the brake flag $I_B$ is reset indicating the first time the routine has been executed since application of the brakes to, the computer program proceeds to a step 48 where the brake flag $I_B$ is set, vehicle speed represented by a hypothetical zero-slip wheel speed $\omega_V$ at zero slip is set equal to the measured wheel speed indicated by wheel speed signal $\omega$ and the initial value of the critical wheel slip value $\lambda_{opt}$ is set to zero.

From step 48 (or decision point 46 during subsequent executions of the routine of Figure 5 during the same braking manoeuvre resulting from the brake flag $I_B$ being set), the computer program proceeds to a step 50, where the hypothetical wheel speed is determined from the integration of the vehicle deceleration signal $\alpha$ from the chassis decelerometer 24. This determination is based on the known constants including the radius of the wheel. Step 50 defines responsive means responsive to the sensed deceleration of the vehicle and the sensed wheel speed for determining the hypothetical wheel speed. From step 50, the computer program proceeds to a step 52 where the value of wheel slip $\lambda$ is determined by the formula

$$\lambda = (\omega_V - \omega)/\omega_V.$$

From step 52, the computer program checks the status of an anti-lock flag $I_{AL}$ at decision point 54 to determine if the hydraulic brake pressure is being controlled in response to a sensed incipient wheel lockup. If set, it represents that the electronic controller 18 is operating in an anti-lock control mode. If reset, the computer program must determine if it should enter into an anti-lock control mode. The computer program does this by first estimating the critical wheel slip value $\lambda_{opt}$ above which unstable braking may occur. The estimation method of this invention utilizes the detection of the maximum vehicle deceleration to determine the critical wheel slip value. For each road surface characteristic, there exists a critical wheel slip value $\lambda_{opt}$ resulting in the maximum braking effort. At this point, the vehicle experiences the maximum deceleration. At both above and below this critical wheel slip value $\lambda_{opt}$, the deceleration will be less than the maximum value. An important characteristic of the anti-lock control apparatus is that when the wheel slip value is smaller than the critical wheel slip value, the vehicle braking dynamics are stable. On the other hand, when the wheel slip value is greater than the critical wheel slip value, the wheel dynamics become unstable and wheel lockup will occur if the anti-lock control apparatus is not implemented.

To accomplish the foregoing, the computer program proceeds from the decision point 54 to the decision point 56 where the present measured value of vehicle deceleration is compared with the prior vehicle deceleration saved at step 36. If the deceleration is greater than the prior stored value of deceleration, the computer program proceeds to a step 58 where the value of wheel slip $\lambda$ determined at step 52 is stored as the new estimation of the critical wheel slip value $\lambda_{opt}$. Decision point 56 defines detecting means for detecting the peak value of the sensed deceleration of the vehicle, and step 58 defines storing means for storing the determined value of wheel slip when the peak value of sensed deceleration is detected, the stored value being the critical wheel slip value. From step 58, or from decision point 56 if vehicle deceleration is not increasing, the computer program proceeds to a decision point 60 where the wheel slip value $\lambda$ determined at step 52 is compared with the stored estimated critical wheel slip value $\lambda_{opt}$. Decision point 60 defines comparing means for comparing the determined value of wheel slip with the sotred (critical) value of wheel slip. If the wheel slip value exceeds the critical wheel slip value λopt indicating an incipient wheel lockup condition, the computer program proceeds to a step 62 where the anti-lock flag I $_{AL}$ is set.

It is noted that in the early stage of brake application, wheel slip value is usually increasing and so is vehicle deceleration. In this case, the wheel slip value λ determined at step 52 will be recorded at step 58 at each execution of the routine of Figure 5. However, at decision point 60 the wheel slip value determined at step 52 will not exceed the estimated critical wheel slip value (which is itself) stored at step 58. Only when the actual critical wheel slip value λ $_{opt}$ is exceeded does vehicle deceleration decrease with increasing wheel slip. When this condition exists, the step 58 will be bypassed and the previously stored estimated critical wheel slip value λ $_{opt}$ is (A) equal to the actual critical wheel slip value for the existing road surface condition and (B) less than the wheel slip value λ determined at step 52.

Ideally, the foregoing decribed steps provide for the sensing of an incipient wheel lock condition which occurs when the wheel slip value λ exceeds the critical wheel slip value λ $_{opt}$. However, interferences and noises from other vehicle subsystems could result in an erroneous indication of a stable braking condition even though the critical wheel slip value λ $_{opt}$ has been exceeded. To ensure wheel lock control under these conditions, the computer program sets the anti-lock control apparatus for operation in the wheel lock control mode even though decision point 60 indicates the critical wheel slip value λ $_{opt}$ is not exceeded if the actual wheel slip value λ exceeds a calibration constant λ $_K$ which is greater than the largest anticipated slip condition for stable braking under all road surface conditions.

The foregoing is accomplished beginning at decision point 64 when decision point 60 determines that the wheel slip value determined at step 52 is less than the estimated critical wheel slip value λ $_{opt}$. At decision point 64, the wheel slip value calculated at step 52 is compared with the calibration constant λ $_K$. If the wheel slip value λ exceeds the calibration constant λ $_K$ indicating an incipient lockup condition, the computer program proceeds to a step 66 where the critical wheel slip value λ $_{opt}$ is set to a value λ $_{KI}$ that is less than the calibration constant λ $_K$. Thereafter the computer program proceeds to the step 62 where the anti-lock flag I $_{AL}$ is set to enable the routine to execute the wheel lock control mode.

Assuming at decision point 64 the wheel slip value λ calculated at step 52 is less than the calibration constant λ $_K$, anti-lock control of the braking apparatus is not required and the computer program proceeds to a provide power assist made for the braking apparatus. This is accomplished beginning at decision point 68 by comparing the position of the output shaft of the electric motor l6 (indicated by position feedback signal P $_M$) with the desired motor position P $_{M-DES}$ determined at step 38 and which is proportional to the vehicle force applied to the brake pedal l4. If the position is less than the desired motor position, the computer program proceeds to a step 70 where the motor control signal MC in the form of a duty cycle modulated signal is increased in accordance with proportional integral and derivative terms. If at decision point 68 it is determined that the position is greater than the desired motor position, the program proceeds to a step 72 where the motor control signal MC provided to the electric motor l6 is decreased in accordance with proportional integral and derivative terms. Decision point 68 and steps 70,72 define power assist means for adjusting the braking force applied to the brake l0.

Typically, the transition between normal power assist and the wheel lock control mode of brake control apparatus may result in initial large wheel speed transients. In accordance with this invention, the onset of an impending wheel lock condition is sensed even before it may be detected via steps and decision points 54 through 66. This is established by a predetermined function of vehicle deceleration and wheel slip as illustrated in Figure 6. The shaded portion of Figure 6 represents the combination of wheel deceleration and wheel slip relative to a constant wheel slip value ω $_R$ that anticipates an impending wheel lockup condition. The refore in accordance with this invention, if the conditions of wheel slip and vehicle deceleration fall within the shaded area of Figure 6, the motor control signal MC is reduced to reduce the braking force in anticipation of the impending wheel lock condition. This is accomplished beginning at decision point 74 which is executed after step 70 or 72. At decision point 74, the computer program determines whether or not the conditions of wheel slip and vehicle deceleration fall within the shaded area of Figure 6. If not, the computer program exits the routine at point 44. However, if decision point 74 anticipates an impending wheel lock condition, the computer program proceeds to a step 76 where the motor control signal MC is reduced by a predetermined function f. The computer program then exits the routine at point 44.

When the anti-lock flag I $_{AL}$ is set at step 62 following decision point 60 or step 66, the routine is set to a wheel lock control mode and the controller bypasses the optimal wheel-slip estimation beginning at decision point 56 and the power assist mode beginning at decision point 68. The wheel lock control mode steps are entered from step 62 when an incipient wheel lockup is first detected and thereafter from decision point 54.

From step 62 or decison point 54 the computer program proceeds to a decision point 78 where the wheel slip value λ $_{opt}$ determined at step 52 is compared to the estimated critical wheel slip value last updated at step 58. As previously indicated, this critical wheel slip value λ $_{opt}$ is the wheel slip resulting in the maximum vehicle deceleration and represents the wheel slip producing the maximum possible braking effort for the particular road surface condition.

If the actual wheel slip value λ determined at step 52 is greater than the estimated critical wheel slip value λ $_{opt}$, the computer program proceeds to a step 80 where the motor control signal MC is decreased in accordance with proportional, integral and derivative terms to reduce the braking force and the resulting slip toward the critical wheel slip value. If at decision point 78 it is determined that the actual wheel slip value $\lambda$ is less than the critical wheel slip value $\lambda_{opt}$, the computer program proceeds to a step 82 where the motor control signal MC is increased in accordance with proportional, integral and derivative terms to increase the braking force and the resulting slip toward the critical wheel slip value. Decision point 78 and steps 80,82 define adjusting means or slip control means for continuously adjusting the braking forces applied to the brake I0.

If at any time during the wheel lock control mode of operation via decision point 78, and steps 80 and 82 the desired motor position $P_{M\text{-}DES}$ determined at step 38 resulting from the force applied to the brake pedal I4 becomes less than the actual position resulting from the operation of steps 80 or 82, the wheel lock control mode is terminated and the routine reverts to the power assist mode previously described. This is accomplished by detecting this condition at decision point 84 and then by resetting the anti-lock flag $I_{AL}$ at step 86. If, however, the desired motor position $P_{M\text{-}DES}$ established by the vehicle operator at step 38 is greater than the position established through operation of the wheel lock control mode, the computer program bypasses the step 86 and exits the routine at point 44 directly from decision point 84. Decision points 60,64,84 define disabling/enabling means for the power assist means 68-72 and the slip control means 78-82.

**Claims**

I. An anti-lock control apparatus for a brake (I0) of a wheel of a vehicle comprising sensing means (24) for sensing the deceleration of the vehicle; determining means (52) for determining the value of wheel slip; detecting means (56) for detecting the peak value of the sensed deceleration of the vehicle; and adjusting means (78,80,82) for adjusting braking forces applied to the wheel; characterised by storing means (58) for storing the determined value of wheel slip when the peak value of sensed deceleration is detected; by comparing means (60) for comparing the value of wheel slip determined by the determining means (56) to the stored value of wheel slip stored by the storing means; and in that the adjusting means (78,80,82) operates to decrease the braking forces when the determined value of wheel slip exceeds the stored value of wheel slip so as to cause substantial correspondence between the determined and stored wheel slip values, whereby the wheel slip is limited to a value producing substantially the peak deceleration of the vehicle.

2. An anti-lock control apparatus as claimed in Claim I comprising a wheel speed sensor (22) for sensing wheel speed; characterised by responsive means (50) responsive to the sensed deceleration of the vehicle and the sensed wheel speed for determining a hypothetical wheel speed of an unbraked wheel of the vehicle; and in that the determining means (52) determines the wheel slip value as being the difference between the sensed and hypothetical wheel speeds.

3. An anti-lock control apparatus as claimed in Claim I or Claim 2, comprising a brake pedal force sensor (20) for providing a force output signal; characterised by power assist means (68-72) for adjusting the braking force in a power assist mode in accordance with the force output signal; in that the adjusting means (78,80,82) comprises slip control means for continuously adjusting the braking force in a wheel lock control mode to cause correspondence between the wheel slip value and the stored wheel slip value; and by disabling/enabling means (60,64,84) for disabling the power assist means and enabling the slip control means when the wheel slip value becomes greater than the stored wheel slip value and for disabling the slip control means and enabling the power assist means when the braking force in the wheel lock control mode becomes greater than the braking force in the power assist mode.

4. A method of operating an anti-lock control apparatus for a brake (I0) of a wheel of a vehicle comprising sensing the deceleration of the vehicle; determining the value of wheel slip; detecting the peak value of the sensed deceleration of the vehicle; storing the determined value of wheel slip when the peak value of sensed deceleration is detected; comparing the value of wheel slip to the stored value of wheel slip; and decreasing the braking forces applied to the wheel when the value of wheel slip exceeds the stored value of wheel slip.

**Patentansprüche**

1. Antiblockier-Steuervorrichtung für eine Bremse (10) eines Fahrzeugrades mit Fühlermittel (24) zum Fühlen der Abremsung des Fahrzeuges; Bestimmungsmittel (52) zur Bestimmung der Radschlupfgröße; Erfassungsmittel (56) zum Erfassen des Spitzenwertes der gefühlten Abremsung des Fahrzeuges; und Einstellmittel (78, 80, 82) zum Einstellen von an dem Rad anliegenden Bremskräften; dadurch gekennzeichnet, daß Speichermittel (58) vorgesehen ist, um den bestimmten Radschlupfwert zu speichern, wenn der Spitzenwert der gefühlten Abbremsung erfaßt ist; daß Vergleichmittel (60) zum Vergleichen des durch das Bestimmungsmittel (56) bestimmten Radschlupfwertes mit dem durch das Speichermittel gespeicherten Radschlupfwert vorgesehen ist und daß das Einstellmittel (78, 80, 82) zur Verminderung der Bremskräfte wirkt, wenn der bestimmte Radschlupfwert den gespeicherten Radschlupfwert übersteigt, um so wesentliche Übereinstimmung zwischen dem bestimmten und dem gespeicherten Radschlupfwert herbeizuführen, wodurch der Radschlupf auf einen Wert begrenzt wird, der im wesentlichen die Spitzenabbremsung des Fahrzeuges erzeugt.

2. Antiblockier-Steuervorrichtung nach Anspruch 1, mit einem Raddrehzahlfühler (22) zum Fühlen der Raddrehzahl; dadurch gekennzeichnet, daß auf die gefühlte Abbremsung des Fahrzeuges und die gefühlte Raddrehzahl ansprechendes Ansprechmittel (50) vorgesehen ist zum Bestimmen einer hypothetischen Raddrehzahl eines ungebremsten Rades des Fahrzeuges, und daß das Bestimmungsmittel (22) den Radschlupfwert als die Differenz zwischen der gefühlten und der hypothetischen Raddrehzahl bestimmt.

3. Antiblockier-Steuervorrichtung nach Anspruch 1 oder 2, mit einem Bremspedal-Kraftfühler (20) zur Erzeugung eines Kraftausgangssignales; dadurch gekennzeichnet, daß Leistungs-Servomittel (68–72) zum Einstellen der Bremskraft in einem Leistungs-Servobetrieb in Übereinstimmung mit dem Kraftausgangssignal vorgesehen ist, daß das Einstellmittel (78, 80, 82) ein Schlupfsteuermittel zum kontinuierlichen Einstellen der Bremskraft in einem Radblockier-Steuerbetrieb umfaßt, um Übereinstimmung des Radschlupfwertes mit dem gespeicherten Radschlupfwert herbeizuführen, und daß Sperr/Freigabe-Mittel (60, 64, 84) vorgesehen ist zum Sperren des Leistungs-Servomittels und Freigeben des Schlupfsteuermittels, wenn der Radschlupfwert größer als der gespeicherte Radschlupfwert wird und zum Sperren des Schlupfsteuermittels und Freigeben des Leistungsservomittels, wenn die Bremskraft beim Radblockier-Steuerbetrieb größer als die Bremskraft beim Leistungs-Servobetrieb wird.

4. Verfahren zum Betrieb einer Antiblockier-Steuervorrichtung für eine Bremse (10) eines Fahrzeugrades, bei dem die Abbremsung des Fahrzeuges gefühlt wird; der Radschlupfwert bestimmt wird; der Spitzenwert der gefühlten Abbremsung des Fahrzeuges erfaßt wird; der bestimmte Radschlupfwert gespeichert wird, wenn der Spitzenwert der gefühlten Abbremsung erfaßt wird; der Radschlupfwert mit dem gespeicherten Radschlupfwert verglichen wird und die an dem Rad anliegenden Bremskräfte vermindert werden, wenn der Radschlupfwert den gespeicherten Radschlupfwert übersteigt.

## Revendications

1. Appareil de commande anti-blocage pour un frein (10) de roue d'un véhicule comportant des moyens formant capteurs (24) destinés à capter la décélération du véhicule; des moyens d'appréciation (52) destinées à apprécier la valeur de glissement de la roue; des moyens de détection (56) destinés à détecter la valeur maximale de la décélération captée du véhicule; et des moyens de réglage (78, 80, 82) destinés à régler les forces de freinage appliquées à la roue; caractérisé en ce qu'il comporte des moyens de mémorisation (58) destinés à mémoriser la valeur déterminée de glissement de roue lorsque la valeur maximale de la décélération captée est détectée; des moyens de comparaison (60) destinés à comparer la valeur de glissement de roue déterminée par les moyens d'appréciation (52) à la valeur mémorisée du glissement de roue mémorisé à l'aide des moyens de mémorisation: et en ce que les moyens de réglage (78, 80, 82) agissent pour diminuer les forces de freinage lorsque la valeur déterminée de glissement de roue dépasse la valeur mémorisée de glissement de roue de façon à entrainer à peu près la correspondance entre les valeurs de glissement de roue déterminée et mémorisée, grâce à quoi le glissement de roue est limité à une valeur produisant à peu près la décélération maximale du véhicule.

2. Appareil de commande anti-blocage selon la revendication 1 comprenant un capteur de vitesse de roue (22) destiné à capter la vitesse de la roue: caractérisé en ce qu'il comporte des moyens de réaction (50) sensibles à la décélération captée du véhicule et à la vitesse de roue captée pour déterminer une vitesse hypothétique de roue d'une roue non freinée du véhicule; et en ce que les moyens d'appréciation (52) déterminent la valeur de glissement de roue comme étant la différence entre les vitesses de roue captée et hypothétique.

3. Appareil de commande anti-blocage selon la revendication 1 ou 2, comprenant un capteur (20) de force de pédale de frein pour produire un signal de sortie de force; caractérisé en ce qu'il comporte des moyens amplificateurs de puissance (68 à 72) destinés à ajuster la force de freinage dans un mode d'amplification de puissance en conformité avec le signal de sortie de force, les moyens de réglage (78, 80, 82) comportent des moyens de commande de glissement destinés à régler de manière continue la force de freinage dans un mode de commande antiblocage de roue pour entrainer la correspondance entre la valeur de glissement de roue et la valeur de glissement de roue mémorisée; et des moyens d'invalidation/validation (60, 64, 84) pour invalider les moyens amplificateurs de puissance et valider les moyens de commande de glissement lorsque la valeur de glissement de roue devient plus grande que la valeur de glissement de roue mémorisée et pour invalider les moyens de commande de glissement et valider les moyens amplificateurs de puissance lorsque la force de freinage dans le mode de commande anti-blocage de roue devient plus grande que la force de freinage dans le mode d'amplification de puissance.

4. Procédé de mise en œuvre d'un appareil de commande anti-blocage pour un frein (10) d'une roue d'un véhicule comprenant la captation de la décélération du véhicule; l'appréciation de la valeur de glissement de roue; la détection de la valeur maximale de la décélération captée du véhicule; la mémorisation de la valeur déterminée de glissement de roue lorsque la valeur maximale de décélération captée est détectée; la comparaison de la valeur du glissement de roue avec la valeur mémorisée de glissement de roue; et la diminution des forces de freinage appliquées à la roue lorsque la valeur du glissement de roue dépasse la valeur mémorisée de glissement de roue.

EP 0 219 238 B1

*Fig.1*

*Fig.2*

*18*

| CPU | RAM | RCM |
|-----|-----|-----|
| I/o | PCU | ADU |

$\omega \rightarrow$

$\leftarrow P_M$

$\leftarrow \alpha$

$\leftarrow F$

MC

BATT

MOTOR

*Fig.3*

POWER UP — *26*

INITIALIZATION — *28*

ALLOW INTERRUPT — *30*

BACKGROUND LOOP — *32*

*Fig.4*

$\dot{\omega}$

$\lambda_o - \lambda$

IMPENDING WHEEL LOCK FUNCTION

*Fig.6*

Fig.5